# EUROPEAN PATENT APPLICATION

(11) **EP 4 644 168 A1**
(43) Date of publication of application: **05.11.2025**
(21) Application number: 23913988.4
(22) Date of filing: 04.01.2023
(51) Int. Cl.: B60L 53/80, B60S 5/06, B60K 1/04

(54) **BATTERY SWAPPABLE VEHICLE AND BATTERY**

(71) Applicant: Contemporary Amperex Technology (Hong Kong) Limited, Hong Kong (HK)
(72) Inventor: YUAN, Haifeng, Ningde, Fujian 352100 (CN); ZHANG, Xiaolin, Ningde, Fujian 352100 (CN)
(74) Representative: von Tietzen und Hennig, Nikolaus
(86) International application number: PCT/CN2023/070476
(87) International publication number: WO 2024/145829

(57) **Abstract**

Disclosed in embodiments of the present application are a battery swappable vehicle and a battery. The battery swappable vehicle (100) includes a battery compartment (10), the battery compartment (10) is arranged in the battery swappable vehicle (100), the battery compartment (10) is configured to accommodate a plurality of batteries (20), and each of the batteries (20) is capable of independently supplying power to the battery swappable vehicle (100). By means of the battery swappable vehicle (100), diversified battery swapping schemes can be provided for a user, improving battery swapping flexibility and optimizing the user experience.

## Description

### TECHNICAL FIELD

The present application relates to the field of batteries, and more particularly, to a battery swappable vehicle and a battery.

### BACKGROUND

As the number of users of electric vehicles has proliferated, a battery swappable vehicle capable of replacing a battery in a battery swapping station has gradually become a choice of more users.

When a battery is replaced for a current battery swappable vehicle in a battery swapping station, only a single battery can be replaced, which cannot meet increasing diversified battery swapping requirements of a user. For example, the battery swappable vehicle is equipped with a plurality of batteries, but the user wants to replace only one battery. A conventional battery swappable vehicle cannot satisfy a battery swapping requirement of the user for autonomously and flexibly deploying batteries, and tends to increase energy consumption and costs when the user is traveling.

### SUMMARY

Embodiments of the present application provide a battery swappable vehicle and a battery, which can meet battery swapping requirements of different users, thereby providing more diversified and flexible battery swapping schemes for the users of the battery swappable vehicle.

According to a first aspect, there is provided a battery swappable vehicle comprising a battery compartment, the battery compartment being arranged in the battery swappable vehicle, the battery compartment being configured to accommodate a plurality of batteries, and each of the batteries being capable of independently supplying power to the battery swappable vehicle.

According to the solution provided in the present application, the battery compartment capable of accommodating a plurality of batteries is arranged in the battery swappable vehicle, and each battery arranged in the battery swapping compartment independently supplies power to the battery swappable vehicle such that a user can flexibly select the number of batteries configured on the battery swappable vehicle according to a requirement of the user, thereby increasing the diversity of battery swapping for the battery swappable vehicle and providing more battery swapping schemes for the user of the battery swappable vehicle.

In a possible implementation, the battery compartment comprises a first sub-battery compartment and a second sub-battery compartment, the batteries being fixedly arranged in the first sub-battery compartment, and the batteries being detachably arranged in the second sub-battery compartment.

According to the solution provided in the present application, the batteries are fixedly arranged in the first sub-battery compartment, that is, the first sub-battery is configured to accommodate non-detachable batteries, and the batteries are detachably arranged in the second sub-battery compartment, that is, the second sub-battery compartment is configured to accommodate detachable batteries. The battery compartment structure having the first sub-battery compartment and the second sub-battery compartment is designed such that the battery swappable vehicle can be equipped with both fixed batteries and replaceable batteries, thereby increasing battery configuration schemes for the battery swappable vehicle, and further expanding battery swapping schemes usable by the battery swappable vehicle.

In a possible implementation, the batteries are arranged in a first direction which is a traveling direction of the battery swappable vehicle.

According to the solution provided in the present application, the batteries are arranged in the traveling direction of the battery swappable vehicle such that the weight distribution of the batteries on the left and right sides of the battery swappable vehicle is more balanced, thereby helping improve the driving safety.

In a possible implementation, the length L1 of the batteries in the first direction is less than the length L2 of the batteries in a second direction, the second direction is the width direction of the battery swappable vehicle, and the first direction is perpendicular to the second direction.

According to the solution provided in the present application, the length L2 of the batteries in the second direction is configured to be less than the length L1 of the batteries in the first direction, thereby helping arrange a larger number of batteries in the battery compartment such that the battery swappable vehicle can have more diversified options of charge levels.

In a possible implementation, a replaceable structure is arranged on the battery, a connection part corresponding to the replaceable structure is arranged on the battery compartment, and the replaceable structure is configured to connect to the connection part to fix the battery in the battery compartment.

According to the solution provided in the present application, the replaceable structure arranged on the battery and the connection part arranged at a corresponding position on the battery compartment ensure that the battery may be fixed in the battery compartment, and may be removed from the battery compartment for replacement.

In a possible implementation, *n* replaceable structures are arranged at intervals on the batteries, where *n* is a positive integer and *n* ≥ 2.

In a possible implementation, the replaceable structure is arranged on a wall of a box of the battery parallel to the second direction.

In this embodiment of the present application, the replaceable structure is arranged on the wall of the battery parallel to the width direction of the battery swappable vehicle, thereby helping improve the stability of the connection between the battery and the battery compartment, and improving the safety performance of the battery swappable vehicle.

In a possible implementation, the length L1 of the batteries in the first direction satisfies 440 mm ≤ L1 ≤ 800 mm, and the length L2 of the batteries in the second direction satisfies 1.5 * L1 ≤ L2 ≤ 2 * L1.

In a possible implementation, 1100 mm ≤ L2 ≤ 1500 mm.

In a possible implementation, the number *n* of the replaceable structures is positively correlated with the length L2 of the batteries in the second direction, and negatively correlated with the rigidity P of the batteries in a third direction which is the height direction of the battery swappable vehicle.

In a possible implementation, 2 ≤ *n* ≤ 4.

In a possible implementation, a distance d1 between adjacent replaceable structures satisfies 0.5 * L2 ≤ d1 ≤ 0.8 * L2.

In a possible implementation, 600 mm ≤ d1 ≤ 1000 mm.

According to the solution provided in the present application, the distance between two adjacent replaceable structures is set to be within an appropriate range such that the number of replaceable structures that need to be arranged on the batteries can be minimized, thereby reducing the production costs of the batteries and improving the replacement efficiency.

In a possible implementation, the length of the batteries in the third direction is L3, and a distance between the geometric center of the replaceable structure and a bottom plate of the battery swappable vehicle is d2, where d2 ≤ 0.5 * L3.

In a possible implementation, 80 mm ≤ L3 ≤ 140 mm.

In a possible implementation, 10 mm ≤ d2 ≤ 50 mm.

According to the solution provided in the present application, setting the distance relationship between the replaceable structure and the bottom plate of the battery swappable vehicle can prevent the battery from protruding out of the bottom plate after the battery is assembled into the battery swappable vehicle or prevent the part of the battery protruding out of the bottom plate from being excessively large in size, and avoid scratching or damage of the battery during use of the battery swappable vehicle due to the excessively small ground clearance of the battery, thereby further improving the safety performance of the battery swappable vehicle.

In a possible implementation, the battery comprises: a first sub-box and a second sub-box, the first sub-box being connected to the second sub-box, and in the case that the mechanical strength of the first sub-box is greater than the mechanical strength of the second sub-box, the replaceable structure being arranged on the first sub-box.

In the case that the mechanical strength of a wall of the first sub-box parallel to the second direction is greater than the mechanical strength of a wall of the second sub-box parallel to the second direction, the replaceable structure is arranged on the wall of the first sub-box parallel to the second direction.

According to the solution provided in the present application, the replaceable structure is arranged on the wall of the box with the higher mechanical strength on the battery, thereby helping improve the durability of the replaceable structure, and helping increase the service life of the battery.

In a possible implementation, a wear-resistant structure is arranged on the battery.

In a possible implementation, the wear-resistant structure is arranged on a wall on which the replaceable structure is located.

According to the solution provided in the present application, the wear-resistant structure is arranged on the battery such that the battery and the replaceable structure arranged on the battery can be protected around the battery, and friction and endplay between the batteries in the traveling direction of the battery swappable vehicle can be further reduced, thereby increasing the service life of the battery.

In a possible implementation, a distance d3 between two opposite wear-resistant structures in the second direction satisfies 0.4 ≤ d3/L2 ≤ 0.7.

In a possible implementation, 700 mm ≤ d3 ≤ 750 mm.

In a possible implementation, the battery swappable vehicle comprises a plurality of the battery compartments and a plurality of the batteries, at least two of the plurality of the batteries being arranged in one of the battery compartments.

In a possible implementation, the battery compartments comprise: a first battery compartment, the first battery compartment being arranged at the bottom of the battery swappable vehicle.

In a possible implementation, a protective plate is arranged on an end face, facing away from the battery swappable vehicle, of the battery arranged in the first battery compartment, and the protective plate is at least a part of the bottom plate of the battery swappable vehicle.

In a possible implementation, the battery compartments comprise: a second battery compartment, the second battery compartment being arranged at the head of the battery swappable vehicle.

In a possible implementation, the battery compartments comprise: a third battery compartment, the third battery compartment being arranged at the tail of the battery swappable vehicle.

According to the solution provided in the present application, the batteries are arranged at different positions of the battery swappable vehicle such that the space inside the battery swappable vehicle can be utilized as much as possible, and the battery swappable vehicle can be equipped with more batteries, thereby providing more diversified capacity selection solutions.

In a possible implementation, the plurality of the batteries have the same shape.

In a possible implementation, the plurality of the batteries have the same size, the same arrangement of an electrical interface, and the same arrangement of a water-cooling interface.

In a possible implementation, the arrangement of the electrical interface comprises at least one of a shape of the electrical interface or a position of the electrical interface.

In a possible implementation, the arrangement of the water-cooling interface comprises at least one of a shape of the water-cooling interface or a position of the water-cooling interface.

In a possible implementation, the electrical interface and/or the water-cooling interface are/is arranged on an end face of the battery facing the battery swappable vehicle.

According to the solution provided in the present application, the positions of the electrical interface and the water-cooling interface of the battery are arranged on the end face of the battery facing the battery swappable vehicle such that the electrical connection and the water-cooling connection with the battery swappable vehicle can be simultaneously completed when the battery is lifted into the battery compartment, thereby helping simplify the battery swapping process of the battery swappable vehicle and improving the battery swapping efficiency.

In a possible implementation, the electrical interface and/or the water-cooling interface are/is arranged at a middle position of the battery in the second direction.

According to the solution provided in the present application, the electrical interface and the water-cooling interface are arranged on a central axis of the battery swappable vehicle in the width direction such that the weights of the left and right sides of the battery swappable vehicle further tend to be consistent, thereby improving the safety of the battery swappable vehicle.

In a possible implementation, the electrical interface is eccentrically arranged on a side of the battery in the first direction.

According to the solution provided in the present application, the electrical interface is eccentrically arranged on a side of the battery in the traveling direction of the battery swappable vehicle such that more space can be reserved for mounting other functional modules or units of the battery, thereby helping improve the space utilization in the battery compartment.

In a possible implementation, a distance d4 between the geometric center of the electrical interface and the geometric center of the battery in the first direction satisfies 120 mm ≤ d4 ≤ 180 mm.

In a possible implementation, the water-cooling interface is arranged on a side opposite to the electrical interface in the first direction.

In a possible implementation, in the first direction, the water-cooling interface is arranged on the same side as the electrical interface and spaced apart from the electrical interface.

According to the solution provided in the present application, the water-cooling interface and the electrical interface are arranged on the same side of the battery, thereby helping save the space in the battery compartment. In addition, the water-cooling interface and the electrical interface are spaced apart, thereby effectively avoiding a potential electrical hazard caused by liquid leakage at the water-cooling interface, and further improving the safety performance of the battery swappable vehicle.

In a possible implementation, the water-cooling interface and the electrical interface are the same integrated interface.

According to the solution provided in the present application, the water-cooling interface and the electrical interface are configured into one integrated interface, thereby reducing redundant and useless terminals and reducing the space occupied by a plurality of interfaces, and further reducing the difficulty in interconnection between the battery and the battery swappable vehicle, and helping improve the battery swapping efficiency.

In a possible implementation, a groove is arranged on the end face of the battery facing the battery swappable vehicle, and the electrical interface and/or the water-cooling interface are/is arranged in the groove.

According to the solution provided in the present application, the groove is arranged on the end face of the battery, and the electrical interface and the water-cooling interface are arranged in the groove, thereby facilitating the arrangement of the water-cooling interface and the electrical interface, and implementing coarse positioning of the electrical interface and the water-cooling interface in a process of mounting the battery into the battery compartment.

In a possible implementation, the plurality of the batteries have at least two different sizes.

In a possible implementation, the plurality of the batteries have at least two different full charge levels.

In a possible implementation, the battery swappable vehicle comprises: a power supply circuit comprising a plurality of access sites, the batteries having different full charge levels being connected to the different access sites.

In a possible implementation, the power supply circuit is configured to be capable of adjusting a series-parallel relationship of the plurality of the batteries.

In a possible implementation, the plurality of the batteries have at least two different energy densities.

In a possible implementation, the plurality of the batteries have at least two different chemical systems.

In a possible implementation, the plurality of the batteries have at least two different shapes.

In a possible implementation, the batteries having different shapes are arranged in different ones of the battery compartments.

In a possible implementation, the batteries having different shapes differ in at least one of a full charge level, an energy density, or an electrochemical system.

According to a second aspect, there is provided a method of manufacturing a battery swappable vehicle, the method comprising providing a battery, the battery compartment being arranged in the battery swappable vehicle, the battery compartment being configured to accommodate a plurality of batteries, and each of the batteries being capable of independently supplying power to the battery swappable vehicle.

According to a third aspect, there is further provided a battery, the battery being arranged in a battery compartment of a battery swappable vehicle, the battery compartment being configured to accommodate a plurality of batteries, and each of the batteries being capable of independently supplying power to the battery swappable vehicle.

In a possible implementation, the batteries are arranged in a first direction which is a traveling direction of the battery swappable vehicle.

In a possible implementation, the length L1 of the batteries in the first direction is less than the length L2 of the batteries in a second direction, the second direction is the width direction of the battery swappable vehicle, and the first direction is perpendicular to the second direction.

In a possible implementation, a replaceable structure is arranged on the battery, and the battery is fixed in the battery compartment through the replaceable structure.

In a possible implementation, *n* replaceable structures are arranged at intervals on the batteries, where *n* is a positive integer and *n* ≥ 2.

In a possible implementation, the replaceable structure is arranged on a wall of a box of the battery parallel to the second direction.

In a possible implementation, the length L1 of the batteries in the first direction satisfies 440 mm ≤ L1 ≤ 800 mm, and the length L2 of the batteries in the second direction satisfies 1.5 * L1 ≤ L2 ≤ 2 * L1.

In a possible implementation, 1100 mm ≤ L2 ≤ 1500 mm.

In a possible implementation, the number *n* of the replaceable structures is positively correlated with the length L2 of the batteries in the second direction, and negatively correlated with the rigidity P of the batteries in a third direction which is the height direction of the battery swappable vehicle.

In a possible implementation, 2 ≤ *n* ≤ 4.

In a possible implementation, a distance d1 between adjacent replaceable structures satisfies 0.5 * L2 ≤ d1 ≤ 0.8 * L2.

In a possible implementation, 600 mm ≤ d1 ≤ 1000 mm.

In a possible implementation, the length of the batteries in the third direction is L3, and a distance between the geometric center of the replaceable structure and a bottom plate of the battery swappable vehicle is d2, where d2 ≤ 0.5 * L3.

In a possible implementation, 80 mm ≤ L3 ≤ 140 mm.

In a possible implementation, 10 mm ≤ d2 ≤ 50 mm.

In a possible implementation, the battery comprises: a first sub-box and a second sub-box, the first sub-box being connected to the second sub-box, and in the case that the mechanical strength of the first sub-box is greater than the mechanical strength of the second sub-box, the replaceable structure being arranged on the first sub-box.

In a possible implementation, in the case that the mechanical strength of a wall of the first sub-box parallel to the second direction is greater than the mechanical strength of a wall of the second sub-box parallel to the second direction, the replaceable structure is arranged on the wall of the first sub-box parallel to the second direction.

In a possible implementation, a wear-resistant structure is arranged on the battery.

In a possible implementation, the wear-resistant structure is arranged on a wall on which the replaceable structure is located.

In a possible implementation, a distance d3 between two opposite wear-resistant structures in the second direction satisfies 0.4 ≤ d3/L2 ≤ 0.7.

In a possible implementation, 700 mm ≤ d3 ≤ 750 mm.

In a possible implementation, an electrical interface and/or a water-cooling interface are/is arranged on an end face of the battery facing the battery swappable vehicle.

In a possible implementation, the electrical interface and/or the water-cooling interface are/is arranged at a middle position of the battery in the second direction.

In a possible implementation, the electrical interface is eccentrically arranged on a side of the battery in the first direction.

In a possible implementation, a distance d4 between the geometric center of the electrical interface and the geometric center of the battery in the first direction satisfies 120 mm ≤ d4 ≤ 180 mm.

In a possible implementation, the water-cooling interface is arranged on a side opposite to the electrical interface in the first direction.

In a possible implementation, in the first direction, the water-cooling interface is arranged on the same side as the electrical interface and spaced apart from the electrical interface.

In a possible implementation, the water-cooling interface and the electrical interface are the same integrated interface.

In a possible implementation, a groove is arranged on the end face of the battery facing the battery swappable vehicle, and the electrical interface and/or the water-cooling interface are/is arranged in the groove.

In the battery swappable vehicle provided in the present application, the battery compartment and the battery of the battery swappable vehicle are designed such that the battery swappable vehicle can be compatible with batteries of different connection manners, different shapes, different sizes, different full charge levels, and different chemical systems. In this way, the battery swappable vehicle can flexibly select different battery swapping schemes according to requirements of the user, thereby providing the user with more diversified battery swapping options.

### DESCRIPTION OF DRAWINGS

To describe the technical solutions in embodiments of the present application more clearly, the following briefly describes the accompanying drawings needed for the embodiments of the present application. Clearly, the accompanying drawings described below are merely some embodiments of the present application. Those of ordinary skill in the art can still derive other accompanying drawings from these accompanying drawings without creative efforts.
FIG. 1 is a bottom view of a battery swappable vehicle according to the present application;
FIG. 2 is a schematic diagram of a battery compartment and a battery according to the present application;
FIG. 3 is another schematic diagram of a battery compartment and a battery according to the present application;
FIG. 4 is a front view of a battery swappable vehicle according to the present application;
FIG. 5 is a schematic diagram of another battery compartment and another battery according to the present application;
FIG. 6 is a schematic diagram of a battery according to the present application;
FIG. 7 is another schematic diagram of a battery according to the present application;
FIG. 8 is a side view of a battery swappable vehicle according to the present application;
FIG. 9 is a schematic diagram of a first battery compartment according to the present application;
FIG. 10 is another schematic diagram of a battery according to the present application; and
FIG. 11 is another schematic diagram of a battery swappable vehicle according to the present application.

### DESCRIPTION OF EMBODIMENTS

The following further describes implementations of the present application in detail with reference to the accompanying drawings and embodiments. The following detailed description of the embodiments and the accompanying drawings are used to describe the principles of the present application by way of example, but are not intended to limit the scope of the present application, that is, the present application is not limited to the described embodiments.

In the description of the present application, it should be noted that, unless otherwise specified, "a plurality of" means two or more, and orientations or positional relationships indicated by the terms "upper", "lower", "left", "right", "inner", "outer", and the like are merely for convenience of description of the present application and simplicity of description, and do not indicate or imply that an apparatus or a component to be referred to must have a specific orientation, or be constructed and operated in a specific orientation, and therefore should not be understood as a limitation on the present application. In addition, the terms "first", "second", "third", and the like are used merely for description purposes, and should not be understood as an indication or implication of relative importance. "Perpendicular" is not perpendicular in the strict sense, but is within an allowable range of error. "Parallel" is not parallel in the strict sense, but is within an allowable range of error.

The orientation words appearing in the following description are all directions shown in the drawings, and do not limit the specific structure in the present application. In the description of the present application, it should be further noted that, unless explicitly specified and defined otherwise, the terms "mounted", "connected", and "connect" are to be understood in a broad sense, for example, may be fixedly connected, detachably connected, or integrally connected, may be directly connected, or may be indirectly connected through an intermediate medium. Those of ordinary skill in the art may understand specific meanings of these terms in the present application according to specific situations.

In the present application, the term "and/or" only describes an association relationship between associated objects, and indicates that three relationships may exist. For example, A and/or B may indicate the following three cases: A exists, both A and B exist, and B exists. In addition, the symbol "/" in the present application generally represents an "or" relationship between associated objects.

Unless otherwise defined, all technical and scientific terms used in the present application have the same meaning as commonly understood by a person skilled in the art of the present application. In the present application, the terms used in the specification of the present application are used only for the purpose of describing specific embodiments and are not intended to limit the present application, and the terms "comprise", "have", and any variations thereof in the specification and claims of the present application and the foregoing description of the drawings are intended to cover a non-exclusive inclusion. The terms "first", "second", and the like in the specification and claims of the present application or in the accompanying drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments. A person skilled in the art explicitly and implicitly understands that the described embodiments in the present application may be combined with another embodiment.

In the present application, the battery may include a lithium ion battery, a lithium-sulfur battery, a sodium ion battery, a magnesium ion battery, or the like, which is not limited in the embodiments of the present application. A cell in the battery may be in a shape of a cylinder, a flat body, a cuboid, or the like, which is not limited in the embodiments of the present application. The cell is generally classified into three types according to a packaging manner, that is, a cylindrical cell, a square cell, and a soft-pack cell, which is not limited in the embodiments of the present application.

The battery described in the embodiments of the present application refers to a physical module including one or a plurality of cells to provide electrical energy. For example, the battery mentioned in the present application may include a battery pack and the like.

To meet different power requirements, the battery may include a plurality of cells, where the plurality of cells may be connected in series, in parallel, or in hybrid, and the hybrid refers to a mixture of series and parallel. Optionally, the plurality of cells may first form a battery module through series connection, parallel connection, or hybrid connection, and then a plurality of battery modules form the battery through series connection, parallel connection, or hybrid connection. Optionally, the plurality of cells may alternatively form a battery directly through series connection, parallel connection, or hybrid connection. Then, the battery is further arranged in an electric device to supply electrical energy to the electric device.

The battery may further include a box, an interior of the box is of a hollow structure, the plurality of cells are accommodated in the box, and the box may prevent liquid or another foreign substance from affecting charging and discharging of the cells. For example, the plurality of cells are combined in parallel, in series, or in hybrid with each other, and then are arranged in the box.

Optionally, the battery may further include other structures, which are not described in detail herein. For example, the battery may further include a busbar component for implementing an electrical connection between the plurality of cells, such as parallel connection, series connection, or hybrid connection. Specifically, the busbar component may implement electrical connection between the cells by connecting electrode terminals of the cells. Further, the busbar component may be fixed to the electrode terminals of the cells through welding. The electrical energy of the plurality of cells may be further led out through the box by using a conductive mechanism. Optionally, the conductive mechanism may also be a busbar component.

The battery swappable vehicle mentioned in the present application may be a fuel vehicle, a gas vehicle, or a new energy vehicle, and the new energy vehicle may be a battery electric vehicle, a hybrid vehicle, or a range-extended electric vehicle, which is not limited in the embodiments of the present application. According to the classification of use, the battery swappable vehicle mentioned in the present application may be a passenger vehicle, an operation vehicle, a logistics vehicle, or the like, which is not limited in the embodiments of the present application.

A motor, a controller, and a battery may be arranged inside the vehicle. The controller is configured to control the battery to supply power to the motor. The battery may be used for supplying power to the vehicle, for example, the battery may be used as an operating power source for the vehicle, used for a circuitry of the vehicle, for example, used for operating power requirements for starting, navigation, and running of the vehicle. In another embodiment of the present application, the battery may be used not only as the operating power source of the vehicle, but also as a driving power source of the vehicle, instead of or partially instead of fuel or natural gas to provide driving power for the vehicle.

In recent years, as the number of users of electric vehicles proliferates, a battery swapping service has been developed. Battery swapping refers to a process in which a vehicle equipped with a battery replaces a battery in a battery swapping station. The battery swapping station is usually equipped with a battery swapping platform, a mobile battery swapping apparatus, a control system, and the like. The mobile battery swapping apparatus is configured to transport a battery to the battery swappable vehicle, remove the battery on the battery swappable vehicle, and mount the battery to be mounted to the battery compartment of the battery swappable vehicle. The mobile battery swapping apparatus may be a rail guided vehicle (RGV), an auto-guided vehicle (RGV), or the like.

An existing battery swappable vehicle can usually replace only a single battery, and cannot satisfy diversified battery swapping requirements of users. Single battery replacement refers to removing a battery from a battery swappable vehicle and mounting a battery to be mounted having the same parameters such as a model, a size, a charge level, a full charge level, and a chemical system as the battery to the battery swappable vehicle. In real life, batteries may be updated and renewed, and the battery swapping requirements of users become more diversified as the usage scenarios of the battery swappable vehicles expand. For example, a user employing a battery of an old model wants to employ a battery of a new model instead. For another example, a user driving only in an urban area wants to replace the currently used battery with a battery with a lower full charge level, to meet a travel requirement. In addition, in the case that a plurality of batteries are assembled in the battery compartment of the battery swappable vehicle, the plurality of batteries usually need to jointly supply power to the battery swappable vehicle, and as a result, all the batteries in the battery compartment have to be replaced during battery swapping. In this case, the battery swapping requirement of the user for replacing only one battery in the battery compartment is not supported. Still alternatively, a user of a battery swappable vehicle equipped with a plurality of batteries only needs to remove one battery without mounting a new battery. Replacement of a single battery pack cannot satisfy the above user requirements, which easily causes unnecessary energy consumption to be lost during the user's travel, increases the economic costs of the user, and is not conducive to improving the user experience.

In view of the above description, the present application provides a battery swappable vehicle capable of supporting diversified battery swapping schemes such that a user can more conveniently and flexibly select an appropriate battery swapping service according to a requirement of the user, thereby reducing the useless energy consumption, reducing the economic costs of the user, and improving the user experience.

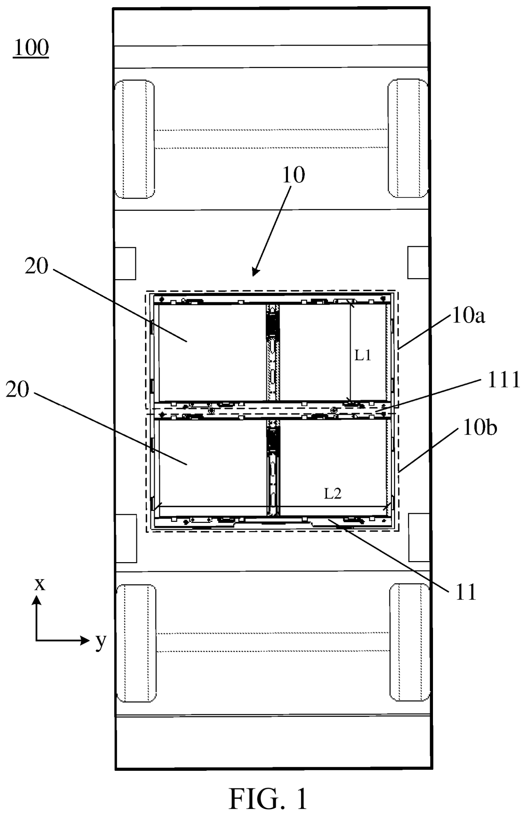

FIG. 1 is a bottom view of a battery swappable vehicle 100 according to the present application, in which a battery compartment 10 and a battery 20 are shown.

As shown in FIG. 1, the battery swappable vehicle 100 includes a battery compartment 10, the battery compartment 10 is arranged in the battery swappable vehicle 100, the battery compartment 10 is configured to accommodate a plurality of batteries 20, and each battery 20 is capable of independently supplying power to the battery swappable vehicle 100.

The battery compartment 10 is configured to accommodate a plurality of batteries 20, that is, the battery swappable vehicle 100 may be equipped with a plurality of batteries 20, or may be equipped with only one battery 20. In the case that the battery swappable vehicle is equipped with a plurality of batteries 20, each battery 20 is capable of independently supplying power to the battery swappable vehicle 100. This means that when one or several of the batteries 20 are removed for charging or maintenance, the remaining batteries 20 can still continue to supply power to the battery swappable vehicle 100, thereby ensuring normal running of the battery swappable vehicle. In addition, when one of the batteries 20 is damaged, the remaining batteries 20 can continue to supply power to the battery swappable vehicle 100.

According to the battery swappable vehicle 100 provided in the embodiments of the present application, the battery compartment 10 capable of accommodating a plurality of batteries 20 is arranged, and each battery 20 is capable of independently supplying power to the battery swappable vehicle 100 such that the user can flexibly select the number of the batteries 20 arranged in the battery compartment 10. For example, in the case that the battery swappable vehicle 100 may be equipped with a plurality of batteries 20, the user may choose, when a long-distance travel is required, to assemble a plurality of batteries 20 on the battery swappable vehicle 100 to meet the travel requirement, or may choose, when a short-distance travel is required, to assemble only one battery 20 to reduce the load of the battery swappable vehicle 100 and reduce unnecessary energy consumption. In this way, the battery swappable vehicle 100 according to the embodiments of the present application provides the user with more flexible and diversified battery swapping schemes.

As shown in FIG. 1, in an embodiment, the battery compartment 10 includes a first sub-battery compartment 10a and a second sub-battery compartment 10b. The batteries 20 are fixedly arranged in the first sub-battery compartment 10a, and the batteries 20 are detachably arranged in the second sub-battery compartment 10b.

The battery compartment 10 capable of accommodating the plurality of batteries 20 includes a plurality of sub-spaces for mounting the batteries 20, and each sub-space accommodates at least one battery 20. The battery 20 fixedly connected to the battery compartment 10 refers to a fixed battery or a fixed battery pack (a fixed pack for short), and the battery detachably connected to the battery compartment 10 refers to a replaceable battery or a replaceable battery pack (a quick swappable pack for short). The fixed battery or the fixed pack is usually welded in the battery compartment 10 and does not need to be replaced. When the charge level of the battery 20 is low, the battery swappable vehicle 100 charges the fixed battery or the fixed pack by using a device such as a charging pile to supplement the electrical energy required for traveling. The fixed battery or the fixed pack does not need to be replaced, thereby greatly reducing the economic costs of the user using the battery swappable vehicle 100. However, the time required for charging the fixed battery or the fixed pack is long, thereby increasing the time costs of the user, and not supporting the long-distance or urgent travel requirement. The replaceable battery or the quick swappable pack is usually fixed in the battery compartment 10 by using a connection structure, and may be removed and replaced by the mobile battery swapping apparatus in the battery swapping station. The replaceable battery or the quick swappable pack enables the battery swappable vehicle 100 to quickly supplement the electrical energy required for traveling, without waiting for the time of battery charging, but at relatively high economic costs.

In this embodiment, the first sub-battery compartment 10a is configured to accommodate the fixed battery or the fixed pack, and the second sub-battery compartment 10b is configured to accommodate the replaceable battery or the quick swappable pack such that the battery swappable vehicle 100 can be compatible with two different forms of batteries 20, thereby enabling the battery swappable vehicle 100 to have both a charging mode and a battery swapping mode. The battery 20 arranged in the first sub-battery compartment 10a is charged in the charging mode when the user has sufficient time and can supplement, through charging, the electrical energy required for traveling. The battery 20 arranged in the second sub-battery compartment 10b is replaced in the battery swapping mode when the user has no sufficient time and needs to quickly supplement the electrical energy required for traveling.

In this way, according to the battery swappable vehicle 100 provided in this embodiment, the first sub-battery compartment 10a and the second sub-battery compartment 10b are designed in the battery compartment 10 such that the battery swappable vehicle 100 can be compatible with different forms of batteries 20, thereby having the charging mode and the battery swapping mode. Therefore, the user can select a more appropriate scheme according to an actual situation and a requirement of the user, thereby expanding the battery swapping schemes that can be supported by the battery swappable vehicle.

In an embodiment, the batteries 20 are arranged in a first direction x which is a traveling direction of the battery swappable vehicle 100.

In the embodiment shown in FIG. 1, the battery compartment 10 may accommodate two batteries 20. In other embodiments, the battery compartment 10 may accommodate a larger number of batteries. The batteries 20 are arranged in the first direction x such that the weight of the batteries 20 is symmetrically distributed on the left and right sides of the battery swappable vehicle 100, thereby helping improve the balance of the battery swappable vehicle 100, and helping improve the safety performance of the battery swappable vehicle 100. It should be understood that, the weight of the batteries 20 being symmetrically distributed on the left and right sides of the battery swappable vehicle 100 may be that the weight of the batteries 20 on the left and right sides of the battery swappable vehicle 100 is completely equal, or may be that a difference in the weight of the batteries 20 on the left and right sides of the battery swappable vehicle 100 is less than a specific threshold. For example, the difference is less than or equal to 5% of the weight of the batteries 20.

As shown in FIG. 1, in an embodiment, the length L1 of the batteries 20 in the first direction x is less than the length L2 of the batteries 20 in the second direction y which is the width direction of the battery swappable vehicle 100. To be specific, in the battery compartment 10, the long sides of the batteries 20 are parallel to the width direction of the battery swappable vehicle 100.

The batteries 20 are laterally arranged in the battery compartment 10 such that the battery compartment 10 is capable of accommodating a larger number of batteries 20 in the case that the volume of the battery compartment 10 is constant, thereby helping improve the space utilization in the battery compartment 10, enabling the battery swappable vehicle 100 to have more options of charge levels, and further enriching the battery swapping schemes for the user.

In an embodiment, a bracket 11 is arranged in the battery compartment 10, the bracket 11 includes at least one support beam 111 parallel to the width direction of the battery swappable vehicle 100, and the support beam 111 separates the battery compartment 10 into a plurality of sub-spaces for accommodating the batteries 20.

It should be understood that the sizes of the plurality of sub-spaces separated by the support beam 111 may be the same or different, which is not limited in the present application. In the embodiment shown in FIG. 1, the support beam 111 separates the battery compartment 10 into two sub-spaces of the same size for accommodating a plurality of batteries 20 of the same size or model. In some other embodiments, the support beam 111 separates the battery compartment 10 into a plurality of sub-spaces of different sizes for accommodating a plurality of batteries 20 of different sizes or models.

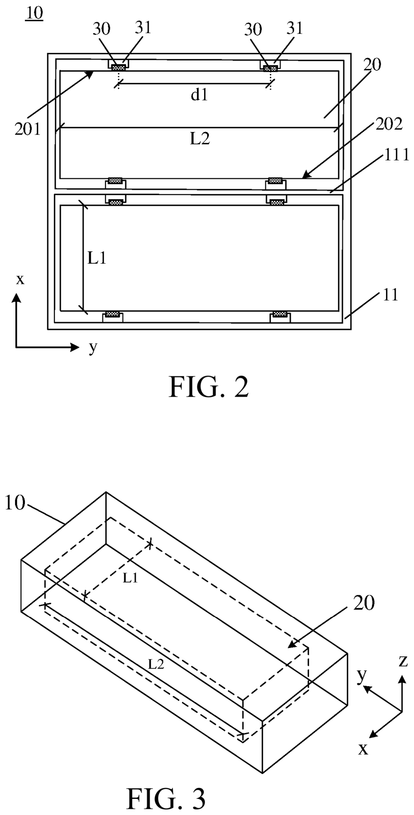

FIG. 2 is a schematic diagram of a battery compartment 10 and a battery 20 according to an embodiment of the present application.

In an embodiment, a replaceable structure 30 is arranged on the battery 20, a connection part 31 corresponding to the replaceable structure 30 is arranged on the battery compartment 10, and the replaceable structure 30 is configured to connect to the connection part 31 to fix the battery 20 in the battery compartment 10.

The battery swappable vehicle 100 may vibrate or may be impacted during traveling. Through arrangement of the replaceable structure 30 and the connection part 31, the battery 20 may be stably mounted in the battery compartment 10, and the electric power is stably supplied in the case that the battery swappable vehicle 100 vibrates or is impacted. Specifically, the replaceable structure 30 may be a structure that can stably connect the battery 20 and the battery swapping compartment 10 and can release the connection relationship under a specific condition, such as a snap structure or a buckle structure. In an embodiment, the connection part 31 has a rail extending in the direction of gravity, the connection part 31 is configured to lock the replaceable structure 30 when the replaceable structure 30 moves upward in the direction of gravity to a predetermined position of the channel, and the connection part 31 is configured to be capable of unlocking the replaceable structure 30 such that the replaceable structure 30 can move downward under the action of gravity of the battery 20 to disengage from the rail. The "predetermined position" of the channel may be any appropriate position within the channel.

The replaceable structure 30 may be fixed on the battery 20 in a manner such as welding or riveting, and the connection part 31 may be fixed at a corresponding position in the battery compartment 10 in a manner such as welding or riveting. The number of replaceable structures 30 for each battery 20 may be one or more. For example, in the case that the battery 20 has a small size and a light weight, the battery 20 can be fixed only by connecting one replaceable structure 30 to the connection part 31 corresponding to the replaceable structure in the battery compartment 10. In the case that the battery 20 has a large size and a heavy weight, two or more replaceable structures 30 and connection parts 31 may need to be connected to fix the battery 20 well.

For the fixed battery or the fixed pack, the replaceable structure 30 may not be arranged thereon, and the connection part 31 may not be arranged at a corresponding position in the battery compartment 10.

In an embodiment, *n* replaceable structures 30 are arranged at intervals on the batteries 20, where *n* is a positive integer and *n* ≥ 2.

In the embodiment shown in FIG. 2, four replaceable structures 30 spaced apart from each other are arranged on the batteries 20, and four connection parts 31 corresponding to the replaceable structures are arranged at corresponding positions in the battery compartment 10. In some other embodiments, the number of replaceable structures 30 may be larger or smaller. Compared with the centralized arrangement of the replaceable structures 30 at one position, arranging the replaceable structures 30 at intervals on the batteries 20 ensures that when the battery 20 is fixed in the battery compartment 10 by using the replaceable structure 30 and the connection part 31, a force receiving structure is more stable.

In an embodiment, the replaceable structure 30 is arranged on a wall of a box of the battery 20 parallel to the second direction y.

In the embodiment shown in FIG. 2, the four replaceable structures 30 are respectively arranged in pairs on a first wall 201 and a second wall 202 of the box of the battery 20. Both the first wall 201 and the second wall 202 are walls parallel to the second direction y. In some other embodiments, alternatively, one replaceable structure 30 may be arranged on the first wall 201 and three replaceable structures 30 may be arranged on the second wall 202. The replaceable structure 30 is arranged on the wall of the box of the battery 20 parallel to the width direction (the second direction x) of the battery swappable vehicle 100, and the connection part 31 corresponding to the replaceable structure in the battery compartment 10 is also arranged on a wall of the battery compartment 10 parallel to the second direction y. As already mentioned above, to arrange a larger number of batteries 20 in the battery compartment 10, the length L1 of the batteries 20 in the first direction x is less than the length L2 of the batteries 20 in the second direction y. In this way, a larger number of replaceable structures 30 may be arranged on the walls of the batteries 20 parallel to the second direction y, thereby improving the reliability and stability of the connection between the battery 20 and the battery compartment 10. In addition, because the length of the battery 20 in the second direction y is long, arranging the replaceable structure 30 on the wall in this direction further helps prevent the battery 20 from being bent or deformed in the second direction y, thereby improving the safety performance of the battery 20.

In the embodiment shown in FIG. 2, the replaceable structure 30 is arranged on the first wall 201 and the second wall 202, and is connected to the connection part 31 arranged on the support beam 111 of the bracket 11 in the battery compartment 10. In some other embodiments, the replaceable structure 30 may be connected to the connection part 31 arranged directly at a corresponding position on an inner wall of the battery compartment. Alternatively, the connection part 31 may be arranged on the wall of the battery 20 such that the battery 20 is connected to the connection part 31 of the battery 20 adjacent thereto by using the replaceable structure 30.

It should be understood that, in the case that a plurality of replaceable structures 30 are arranged on the battery 20, all of the replaceable structures 30 may be arranged on the wall of the box of the battery 20 parallel to the second direction y. In some other embodiments, alternatively, some of the replaceable structures 30 may be arranged on the wall of the box of the battery 20 parallel to the second direction y, and the remaining replaceable structures 30 are arranged on another wall of the box of the battery 20, for example, a wall of the box parallel to the first direction x, thereby reducing shaking or collision of the battery 20 in the traveling direction of the battery swappable vehicle 100. The replaceable structure 30 arranged on the wall of the box parallel to the first direction x may be connected to the connection part 31 at a corresponding position in the battery compartment 10, or may be connected to the support beam 111 of the bracket 11 in the battery compartment 10. In some other embodiments, alternatively, all the replaceable structures 30 may be arranged on the wall of the box of the battery 20 parallel to the first direction x.

In an embodiment, the length L1 of the batteries 20 in the first direction x satisfies 440 mm ≤ L1 ≤ 800 mm, and the length L2 of the batteries 20 in the second direction y satisfies 1.5 * L1 ≤ L2 ≤ 2 * L1.

For example, in the case that the lengths of the batteries 20 in the first direction x and the second direction y satisfy the above conditions, the replaceable structure 30 may be arranged only on the wall of the box of the battery 20 parallel to the second direction y.

In an embodiment, 1100 mm ≤ L2 ≤ 1500 mm.

FIG. 3 is another schematic diagram of a battery compartment 10 and a battery 20 according to the present application.

In an embodiment, the number *n* of the replaceable structures 30 is positively correlated with the length L2 of the batteries 20 in the second direction y, and negatively correlated with the rigidity P of the batteries 20 in a third direction z which is the height direction of the battery swappable vehicle 100. Optionally, 2 ≤ *n* ≤ 4.

Specifically, as shown in FIG. 3, the number of the replaceable structures 30 may be set according to the length L2 of the batteries 20 in the second direction y and the rigidity of the batteries in the third direction y. For example, the greater length L2 of the batteries 20 in the second direction y, that is, the larger size of the batteries 20 in the transverse direction of the battery swappable vehicle 100 indicates the larger number of the replaceable structures 30 that may be arranged to ensure the stability of the connection between the battery 20 and the battery compartment 10. For another example, the greater rigidity of the batteries 20 in the third direction z indicates the greater stress that the batteries 20 can bear in the third direction z, and the lower possibility that deformation occurs when the batteries are subjected to vibration, shaking, or impact. In this case, a relatively small number of replaceable structures 30 may be arranged to implement stable connection between the battery 20 and the battery compartment 10.

In an embodiment, as shown in FIG. 2, a distance d1 between adjacent replaceable structures 30 satisfies 0.5 * L2 ≤ d1 ≤ 0.8 * L2. Optionally, 600 mm ≤ d1 ≤ 1000 mm.

For example, when the distance d1 between two adjacent replaceable structures 30 satisfies the above condition, the replaceable structure 30 may be arranged only on the wall of the box of the battery 20 parallel to the second direction y. In this embodiment, setting the distance d1 between two adjacent replaceable structures 30 to be within an appropriate range can minimize the number of the replaceable structures 30 that need to be arranged on the batteries 20 while ensuring stable connection. In this way, the number of corresponding connection parts 31 that need to be arranged in the battery compartment 10 is also reduced, thereby helping reduce the production costs of the battery swappable vehicle 100 and improve the battery swapping efficiency of the battery swappable vehicle 100.

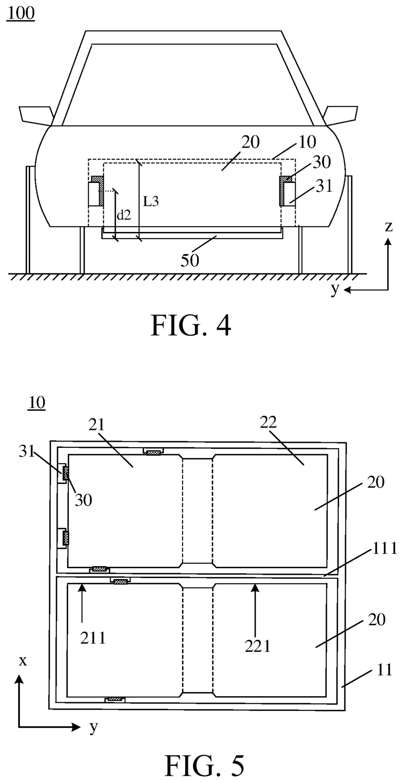

FIG. 4 is a front view of a battery swappable vehicle 100 according to an embodiment of the present application.

For the battery compartment 10 arranged at the bottom of the battery swappable vehicle 100, if the size of the battery 20 in the battery compartment 10 is excessively large in the third direction z, or the mounting position of the battery in the third direction is excessively low and the battery protrudes out of the bottom plate (also referred to as the underpan) of the battery swappable vehicle 100, the battery 20 may be easily scratched during traveling of the battery swappable vehicle 100, resulting in damage to the battery 20, reduction in the service life, and safety problems in severe cases.

As shown in FIG. 4, in an embodiment, the length of the batteries 20 in the third direction z is L3, and a distance between the geometric center of the replaceable structure 30 and a bottom plate of the battery swappable vehicle 100 is d2, where d2 ≤ 0.5 * L3.

In this embodiment, controlling the distance between the replaceable structure 30 on the battery 20 and the bottom plate of the battery swappable vehicle 100 to be within an appropriate range can effectively avoid the case that the battery 20 is scratched from the ground during traveling of the battery swappable vehicle 100 due to the excessively small ground clearance of the battery, thereby improving the safety performance of the battery swappable vehicle 100.

Optionally, 80 mm ≤ L3 ≤ 140 mm. Optionally, 10 mm ≤ d2 ≤ 50 mm.

FIG. 5 is another schematic diagram of another battery compartment 10 and another battery 20 according to the present application.

In an embodiment, the battery 20 comprises a first sub-box 21 and a second sub-box 22, and the first sub-box 21 is connected to the second sub-box 22. In the case that the mechanical strength of the first sub-box 21 is greater than the mechanical strength of the second sub-box 22, the replaceable structure 30 is arranged on the first sub-box 21.

In the embodiment shown in FIG. 5, the battery 20 has two sub-boxes, namely, the first sub-box 21 and the second sub-box 22. In some other embodiments, the battery 20 may alternatively have a larger or smaller number of sub-boxes. In the case that the battery 20 has a plurality of sub-boxes, the mechanical strength of the plurality of sub-boxes is not necessarily the same due to influence of factors such as the costs or the manufacturing process. Therefore, the replaceable structure 30 may be arranged on a sub-box having the higher mechanical strength, such as the above-described first sub-box 21, to prevent the battery 20 from breaking due to stress concentration at the replaceable structure 30.

Still referring to FIG. 5, in an embodiment, in the case that the mechanical strength of the wall 211 of the first sub-box 21 parallel to the second direction y is greater than the mechanical strength of the wall 221 of the second sub-box 22 parallel to the second direction y, the replaceable structure 30 is arranged on the wall 211 of the first sub-box 21 parallel to the second direction y.

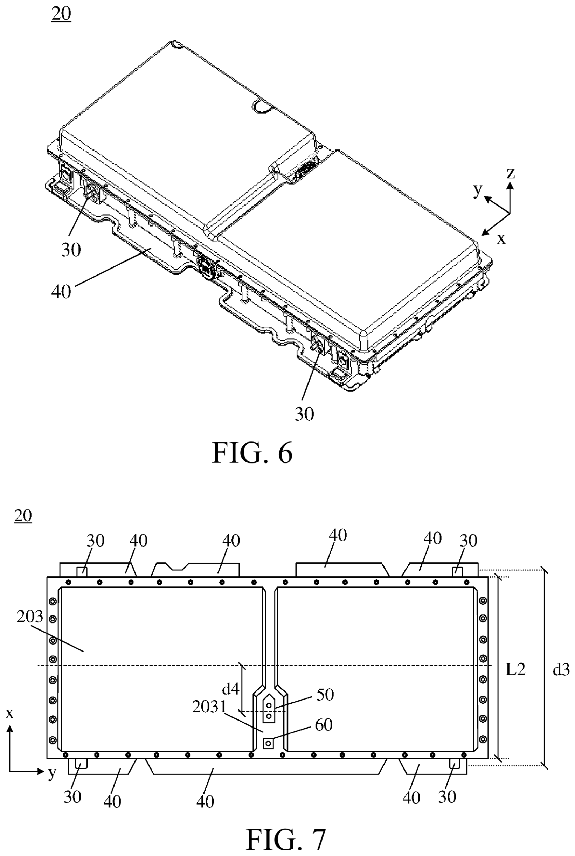

FIG. 6 is a schematic diagram of a battery 20 according to an embodiment of the present application.

In an embodiment, a wear-resistant structure 40 is arranged on the battery 20.

Specifically, a wear-resistant structure 40 may be arranged on at least one of four walls of the battery 20 facing the battery compartment 10, and the wear-resistant structure 40 may prevent the battery 20 from coming into direct contact with the battery compartment 10 in the case of shaking or endplay of the battery, thereby protecting the battery 20 and helping prolong the service life of the battery 20. The wear-resistant structure 40 may be any structure that can protect the wall of the battery 20 facing the battery compartment 10, such as a block-like structure, a beam-like structure, or a rib-like structure. The material of the wear-resistant structure 40 may be the same as or different from the material of the wall of the battery 20, which is not limited in the embodiments of the present application. In an embodiment, the mechanical strength of the wear-resistant structure 40 is greater than that of the wall of the battery 20. In another embodiment, the wear-resistant structure 40 may be a structure having specific elasticity. The structure having elasticity may be that the material of the wear-resistant structure 40 has specific elasticity, or may be that the wear-resistant structure 40 includes a structure having elasticity, for example, a U-shaped groove.

For the replaceable battery or the quick swappable pack, the replaceable structure 30 arranged thereon usually protrudes out of a frame of the battery 20 such that there is a specific gap between the wall of the battery 20 and the wall of the battery compartment 10 after the battery 20 is fixed in the battery compartment 10. For the battery compartment 10 provided with the bracket 11, there is also a specific gap between the wall of the battery 20 and the bracket 11 after the battery 20 is fixed on the bracket 11. The presence of this gap easily causes endplay of the battery 20 under the influence of external force, which is not conducive to the stable connection between the battery 20 and the battery compartment 10.

In an embodiment, the wear-resistant structure 40 is arranged on a wall on which the replaceable structure 30 is located.

The wear-resistant structure 40 shown in FIG. 6 is a beam-like structure. The replaceable structure 30 is arranged on two walls of the battery 20 parallel to the second direction y, and the wear-resistant structure 40 is also arranged on the walls accordingly.

The wear-resistant structure 40 may be a separate structure that is arranged on the battery 20 in a manner such as welding or riveting. The wear-resistant structure 40 may alternatively be a part of the box of the battery 20 that extends outward, and the wear-resistant structure 40 is manufactured in a manner such as stamping during manufacturing of the box of the battery 20. The wear-resistant structure 40 is arranged on the wall on which the replaceable structure 30 is located. On the one hand, the replaceable structure 30 protruding out of the wall of the battery 20 can be protected. On the other hand, a supporting and fixing function can be further provided between the wall of the battery 20 and the wall of the battery compartment 10, thereby alleviating the endplay of the battery 20 due to the gap between the battery 20 and the battery compartment 10, prolonging the service life of the battery 20, and further improving the safety performance of the battery swappable vehicle.

In another embodiment, the wear-resistant structure 40 is arranged on each of the four walls of the battery 20 facing the battery compartment 10. The shape of the wear-resistant structure 40 arranged on the wall on which the replaceable structure 30 is located, and the size of the protrusion out of the wall of the battery 20 may be the same as or different from the shape of the wear-resistant structure 40 arranged on the remaining two walls and the size of the protrusion out of the wall of the battery 20. Arrangement may be flexibly performed according to the batteries 20 of different models and the battery compartments 10 of different sizes or at different positions.

FIG. 7 is another schematic diagram of a battery 20 according to the present application.

In the embodiment shown in FIG. 7, the length of the protrusion of the wear-resistant structure 40 from the wall 221 of the battery 20 in the first direction x is greater than the length of the protrusion of the replaceable structure 30 from the wall 221 of the battery 20 in the first direction x. In some other embodiments, the length of the protrusion of the wear-resistant structure 40 from the wall 221 of the battery 20 in the first direction x may be equal to the length of the protrusion of the replaceable structure from the wall 221 of the battery 20 in the first direction x.

In an embodiment, a distance d3 between two opposite wear-resistant structures 40 in the second direction y satisfies 0.4 ≤ d3/L2 ≤ 0.7. It should be understood that the distance d3 between two opposite wear-resistant structures 40 refers to a distance between geometric centers of the two opposite wear-resistant structures.

In an embodiment, 700 mm ≤ d3 ≤ 750 mm.

To meet long-distance and long-journey driving requirements of the user, in addition to continuously increasing the energy density of a single battery 20, a larger number of batteries 20 further need to be assembled on the battery swappable vehicle 100.

In an embodiment, the battery swappable vehicle 100 includes a plurality of battery compartments 10 and a plurality of batteries 20, and at least two of the plurality of batteries 20 are arranged in the same battery compartment 10. In the case that the battery swappable vehicle 100 has a plurality of battery compartments 10, the battery swappable vehicle 100 may accommodate a larger number of batteries 20. For example, the battery swappable vehicle 100 has two battery compartments 10, one of the two battery compartments 10 accommodates at least two batteries 20, or each of the two battery compartments 10 accommodates at least two batteries 20.

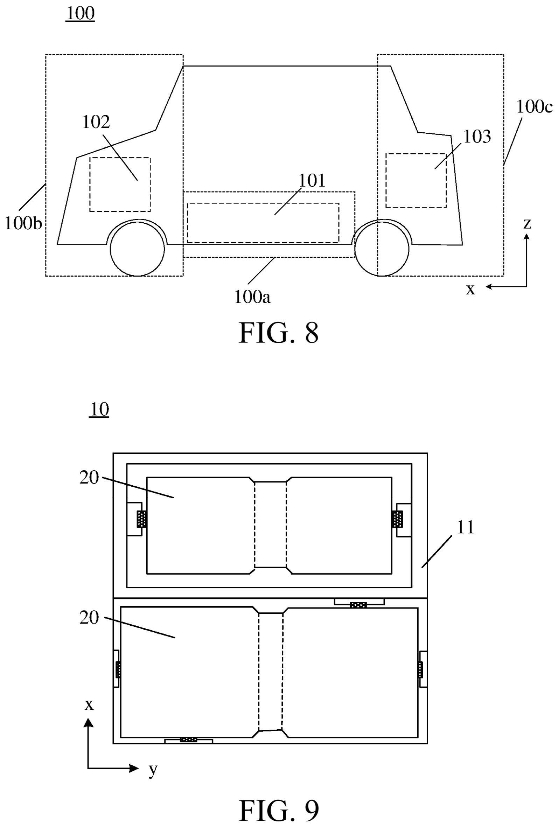

The battery compartment 10 of the battery swappable vehicle 100 is further described below. FIG. 8 is another schematic diagram of a battery swappable vehicle 100 according to the present application.

In an embodiment, as shown in FIG. 8, the battery compartments 10 include a first battery compartment 101, and the first battery compartment 101 is arranged at the bottom 100a of the battery swappable vehicle 100.

The bottom 100a of the battery swappable vehicle 100 refers to a space near the bottom plate of the vehicle. There is usually a large space at the bottom 100a of the battery swappable vehicle 100, and the first battery compartment 101 arranged at the bottom 100a of the battery swappable vehicle 100 may correspondingly have a larger space to accommodate a larger number of batteries 20. In the case that each battery 20 is capable of individually supplying power to the battery swappable vehicle 100, the user may be provided with more diversified options of battery swapping capacities, thereby helping improve the user experience.

In an embodiment, referring to FIG. 4, a protective plate 50 is arranged on an end face, facing away from the battery swappable vehicle 100, of the battery 20 arranged in the first battery compartment 101, and the protective plate 50 is at least a part of the bottom plate of the battery swappable vehicle 100.

Specifically, because the first battery compartment 101 is located near the bottom plate of the battery swappable vehicle 100, arranging the protective plate 50 on the battery 20 can, on the one hand, protect the battery 20 against damage when the bottom plate of the battery swappable vehicle 100 is scratched. On the other hand, the protective plate 50 may serve as a part of the bottom plate of the battery swappable vehicle 100. In other words, the bottom plate of the battery swappable vehicle 100 employs a modular bottom plate structure rather than an integrated bottom plate, and the part of the bottom plate of the battery swappable vehicle 100 at the position of the first battery compartment 101 is the protective plate 50 of the battery 20. When the battery 20 of the battery swappable vehicle 100 is replaced, the part of the bottom plate is replaced together with the replacement of the battery 20 such that there is no need to mount the bottom plate again for the battery swappable vehicle 100 after the battery swapping, thereby simplifying the battery swapping step, shortening the time required for the battery swapping, improving the battery swapping efficiency, and further improving the user experience.

In an embodiment, as shown in FIG. 8, the battery compartments 10 include a second battery compartment 102, and the second battery compartment 102 is arranged at the head 100b of the battery swappable vehicle 100.

The head 100b of the battery swappable vehicle 100 refers to a space near the front, for example, the first 1/3 of the space, of the battery swappable vehicle 100 in the first direction x. The structure of the head 100b of the battery swappable vehicle 100 is different from that of the bottom 100a. To adapt to the structure of the head 100b of the battery swappable vehicle 100, the shape and size of the second battery compartment 102 may be different from those of the first battery compartment 101 such that the second battery compartment 102 has a larger space and is capable of accommodating a larger number of batteries 20, thereby further increasing the overall capacity of the battery swappable vehicle 100.

During battery swapping for the battery swappable vehicle 100, the mobile battery swapping apparatus in the battery swapping station moves to the head 100b of the vehicle, removes the battery 20 in the second battery compartment 102, and then mounts the battery 20 to be mounted into the second battery compartment 102. During battery swapping for the battery swappable vehicle 100 in the battery swapping station, one mobile battery swapping apparatus may replace the batteries in different battery compartments one by one according to a sequence. Alternatively, a plurality of mobile battery swapping apparatuses may simultaneously replace the batteries in a plurality of battery compartments. For example, the battery swappable vehicle 100 includes a first battery compartment 101 and a second battery compartment 102, and the battery swapping process of the battery swappable vehicle 100 in the battery swapping station may be as follows: One mobile battery swapping apparatus first moves to the bottom 100a of the battery swappable vehicle 100 and completes the replacement of the batteries 20 in the first battery compartment 101, and then moves to the head 100b of the battery swappable vehicle 100 and performs the replacement of the batteries 20 in the second battery compartment 102. Alternatively, the battery swapping process of the battery swappable vehicle 100 may be as follows: The mobile battery swapping apparatus first moves to the head 100b of the battery swappable vehicle 100 and completes the replacement of the batteries 20 in the second battery compartment 102, and then moves to the bottom 100a of the battery swappable vehicle 100 and performs the replacement of the batteries 20 in the first battery compartment 102. Alternatively, the battery swapping process of the battery swappable vehicle 100 may be as follows: Two mobile battery swapping apparatuses in the battery swapping station move to the head 100b and the bottom 100a of the battery swappable vehicle 100, respectively, and simultaneously replace the batteries 20 in the first battery compartment 101 and the second battery compartment 102.

In an embodiment, as shown in FIG. 8, the battery compartments 10 include a third battery compartment 103, and the third battery compartment is arranged at the tail 100c of the battery swappable vehicle 100.

The tail 100c of the battery swappable vehicle 100 refers to a space near the back, for example, the last 1/3 of the space, of the battery swappable vehicle 100 in the first direction x. Similar to the second battery compartment 102, the shape and size of the third battery compartment 103 may also be different from those of the first battery compartment 101, so as to adapt to the structure of the tail 100c of the battery swappable vehicle 100 such that the battery swappable vehicle 100 is capable of accommodating more batteries 20. The manner of replacing the batteries in the third battery compartment 103 is similar to the manner of replacing the batteries 20 in the second battery compartment 102, and is also implemented by using the mobile battery swapping apparatus. Details are not described herein again.

In the embodiment shown in FIG. 8, the battery swappable vehicle 100 has all of the first battery compartment 101, the second battery compartment 102, and the third battery compartment 103. In some other embodiments, the battery swappable vehicle 100 may include only the first battery compartment 101, only the second battery compartment 102, or only the third battery compartment 103, where the number of the first battery compartments 101, the number of the second battery compartments 102, and the number of the third battery compartments 103 each may be one or more. In some other embodiments, the battery swappable vehicle 101 may alternatively include any two of the first battery compartment 101, the second battery compartment 102, and the third battery compartment 103.

It should be understood that, in the above battery swapping scenario, the batteries 20 arranged in the first battery compartment 101, the second battery compartment 102, and the third battery compartment 103 each are capable of independently supplying power to the battery swappable vehicle 100. Although the battery swappable vehicle 100 is equipped with a plurality of battery compartments 10 and a plurality of batteries 20, during battery swapping, a user of the battery swappable vehicle 100 may selectively replace one or more batteries 20 in one specific battery compartment 10 according to a driving requirement of the user, instead of having to replace all the batteries 20 in one specific battery compartment 10. For example, the battery swappable vehicle 100 includes a first battery compartment 101 and a second battery compartment 102, a first battery and a second battery are arranged in the first battery compartment 101, and a third battery and a fourth battery are arranged in the second battery compartment 102. During battery swapping, the user may choose to replace only the first battery, may choose to replace the first battery and the second battery, may choose to replace the first battery and the third battery, may choose to replace the first battery, the second battery, and the third battery, or may choose to replace the first battery, the second battery, the third battery, and the fourth battery.

In the embodiment shown in FIG. 8, the first battery compartment 101, the second battery compartment 102, and the third battery compartment 103 each have a regular shape. In some other embodiments, the first battery compartment 101, the second battery compartment 102, and the third battery compartment 103 may be arranged to have an irregular shape.

On this basis, a plurality of battery compartments 10 are arranged at different positions of the battery swappable vehicle 100, thereby increasing the capacity that can be carried by the battery swappable vehicle 100, and further enriching the battery swapping capacities that may be selected by the user, and effectively improving the battery swapping flexibility of the battery swappable vehicle 100.

The plurality of batteries 20 arranged in the same battery compartment 10 are described in detail below.

In an embodiment, the plurality of batteries 20 have the same shape.

Although the shapes of the plurality of battery compartments 10 of the battery swappable vehicle 100 may be different, the shapes of the plurality of batteries 20 arranged in the same battery compartment 10 may be the same. Arranging the plurality of batteries 20 in the same battery compartment 10 to have the same shape facilitates the processing and mass production of the batteries 20, helping save the production costs of the batteries 20.

Taking the first battery compartment 101 shown in FIG. 8 as an example, because the first battery compartment 101 is located at the bottom 100a of the battery swappable vehicle 100, the first battery compartment may be arranged to have a regular space in a cuboid shape. The plurality of batteries 20 accommodated in the first battery compartment 101 may alternatively be all configured to have a regular cuboid shape, or may alternatively be all configured to have a regular cylindrical shape.

FIG. 9 is another schematic diagram of a first battery compartment 101 according to an embodiment of the present application.

In another possible embodiment, the plurality of batteries 20 arranged in the same battery compartment 10 have different sizes.

During the development of the battery 20, the size of the battery 20 may change in order to adapt to vehicles of more models. Taking the battery 20 in the cuboid shape as an example, the first-generation battery 20 and the second-generation battery 20 differ in at least one of a length, a width, or a height, and the second-generation battery 20 may have a smaller volume and a higher capacity. For a battery swappable vehicle 100 already equipped with the first-generation battery 20, replacing the first-generation battery 20 with the second-generation battery 20 will certainly become an inevitable battery swapping requirement.

On this basis, in the embodiment shown in FIG. 9, brackets 11 are arranged at some positions in the first battery compartment 101 to meet a requirement for accommodating a plurality of batteries 20 of different models. In some other embodiments, the first battery compartment 101 may alternatively be arranged to have an irregular shape, and the same rule is applied to the second battery compartment 102 and the third battery compartment 103. Details are not described herein again.

In an embodiment, the plurality of the batteries 20 have the same size, the same arrangement of an electrical interface 50, and the same arrangement of a water-cooling interface 60.

Herein, the size of the battery 20 is the size of the battery 20 in each direction of the three-dimensional space. For example, the size of the battery 20 in the cuboid shape refers to the length, the width, and the height of the battery 20. For another example, the size of the battery 20 in the cylindrical shape refers to the diameter and the height of the battery 20. For another example, the size of the battery 20 in the irregular shape refers to the lengths of the battery 20 in the first direction x, the second direction y, and the third direction z.

Herein, the arrangement of the electrical interface 50 comprises at least one of a shape of the electrical interface 50 or a position of the electrical interface 50. The arrangement of the water-cooling interface 60 comprises at least one of a shape of the water-cooling interface 60 or a position of the water-cooling interface 60.

The plurality of batteries 20 having the same size, the same arrangement of the electrical interface 50, and the same arrangement of the water-cooling interface 60 are arranged in the same battery compartment 10, thereby facilitating the mass production of the battery swappable vehicle 100 and the battery 20, and helping improve the production efficiency of the battery swappable vehicle 100. In addition, for the battery swapping station, the batteries 20 having different sizes, different arrangements of the electrical interface 50, and different arrangements of the water-cooling interface 60 are stored at different positions in the battery swapping station. Therefore, the plurality of batteries 20 having the same size, the same arrangement of the electrical interface 50, and the same arrangement of the water-cooling interface 60 are arranged in the same battery compartment 10 such that when the mobile battery swapping device replaces the batteries 20 in the same battery compartment 10, the mobile battery swapping device only needs to pick up or place the batteries 20 at fixed positions in the battery swapping station, without a need to move to a plurality of different positions in the battery swapping station, thereby helping simplify the battery swapping process and improve the battery swapping efficiency.

The specific structure of the battery 20 is further described below.

Still referring to FIG. 7, in an embodiment, the electrical interface 50 and/or the water-cooling interface 60 are/is arranged on an end face 203 of the battery 20 facing the battery swappable vehicle 100.

During battery swapping, the mobile battery swapping apparatus usually performs an operation under the battery swappable vehicle 100, removes the battery 20 in the battery compartment 10 of the battery swappable vehicle 100, and then lifts the battery 20 to be mounted into the battery compartment 10. Therefore, the electrical interface 50 and/or the water-cooling interface 60 of the battery 20 are/is arranged on the end face 203 of the battery 20 such that the electrical connection and the water-cooling connection between the battery 20 and the battery swappable vehicle 100 are automatically completed in the process of lifting the battery 20 into the battery compartment 10, without requiring an additional connection operation, thereby further simplifying the battery swapping process of the battery swappable vehicle 100, and improving the battery swapping efficiency.

It should be understood that in the embodiment shown in FIG. 7, the electrical interface 50 and the water-cooling interface 60 are merely simple illustrations. In some more specific embodiments, the electrical interface 50 is a connector of an electrical box of the battery 20, and the connector of the electrical box is configured to output electrical energy of the battery 20 to the battery swappable vehicle 100. The water-cooling interface 60 is a connector of a water-cooling box of the battery 20, and the connector of the water-cooling box includes a liquid inlet and a liquid outlet for connection to a water-cooling system of the battery swappable vehicle 100.

In an embodiment, as shown in FIG. 7, the electrical interface 50 and/or the water-cooling interface 60 are/is arranged at a middle position of the battery 20 in the second direction y.

The electrical interface 50 and/or the water-cooling interface 60 are/is arranged at the middle position of the battery 20 in the second direction y such that the electrical interface 50 and/or the water-cooling interface 60 are/is located on the central axis of the battery swappable vehicle 100 in the width direction after the battery 20 is mounted in the battery compartment 10, and therefore the weight of the battery 20 on both sides of the vehicle is not affected by the electrical interface 50 and/or the water-cooling interface 60, thereby further improving the balance between the left and right sides of the battery swappable vehicle 100, and helping improve the safety performance of the battery swappable vehicle 100.

In an embodiment, as shown in FIG. 7, the electrical interface 50 is eccentrically arranged on a side of the battery 20 in the first direction x. To be specific, in the first direction x, the electrical interface 50 is located at a position other than the middle position.

With the above arrangement, more space can be reserved in the first direction x for mounting other functional modules, for example, a battery management system (BMS), of the battery 20 while ensuring the balance of the battery 20 in the second direction y. In this way, the space efficiency in the battery compartment 10 is improved.

In an embodiment, a distance d4 between the geometric center of the electrical interface 50 and the geometric center of the battery 20 in the first direction x satisfies 120 mm ≤ d4 ≤ 180 mm.

In an embodiment, as shown in FIG. 7, in the first direction x, the water-cooling interface 60 is arranged on the same side as the electrical interface 50 and spaced apart from the electrical interface 50.

Specifically, "the water-cooling interface 60 is arranged on the same side as the electrical interface 50" means that both the electrical interface 50 and the water-cooling interface 60 are arranged at positions near the front or the back of the battery 20 in the first direction x. For example, both the electrical interface 50 and the water-cooling interface 60 are arranged at positions near the first 1/2 in the first direction x. Arranging the electrical interface 50 and the water-cooling interface 60 on the same side helps save the space in the battery compartment 10. In addition, to avoid the potential influence of the liquid leakage at the water-cooling interface 60 on the electrical interface 50, the electrical interface 50 and the water-cooling interface 60 are spaced apart, thereby effectively avoiding a potential electrical hazard caused by liquid leakage at the water-cooling interface 60, and improving the safety performance of the battery swappable vehicle 100.

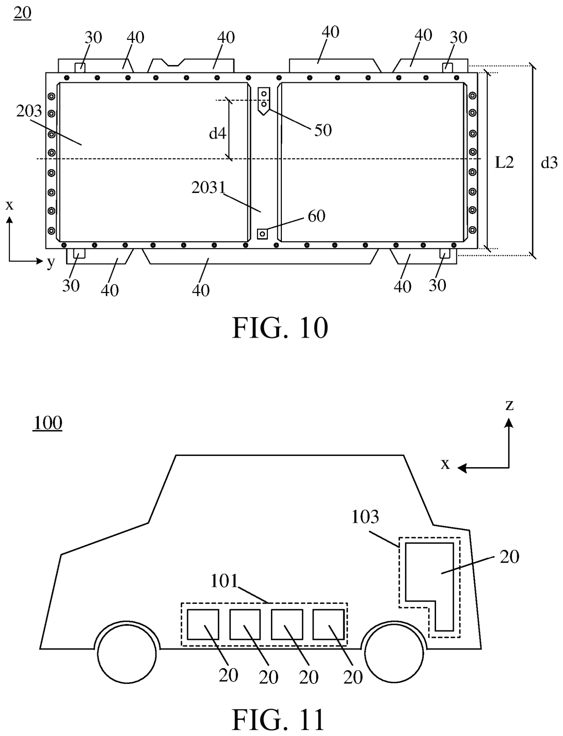

FIG. 10 is another schematic diagram of a battery 20 according to an embodiment of the present application.

In an embodiment, as shown in FIG. 10, the water-cooling interface 60 is arranged on a side opposite to the electrical interface 50 in the first direction x.

Specifically, "the water-cooling interface 60 is arranged on a side opposite to the electrical interface 50" means that the electrical interface 50 and the water-cooling interface 60 are respectively arranged at positions near the front or the back of the battery 20 in the first direction x. For example, the electrical interface 50 is arranged at a position near the front 1/2 in the first direction x, and the water-cooling interface 60 is arranged at a position near the rear 1/2 in the first direction x.

In an embodiment, the electrical interface 50 and the water-cooling interface 60 are the same integrated interface.

Specifically, the electrical interface 50 and the water-cooling interface 60 are sealed and electrically isolated from each other, so as to be integrated into one integrated interface. The electrical connection and the water-cooling connection may be simultaneously implemented by using one integrated interface in the process of mounting the battery 20 to the battery compartment 10. The electrical interface 50 and the water-cooling interface 60 are configured into one integrated interface, thereby saving redundant and useless interfaces, and saving the space of the battery 20 and the battery compartment 10 occupied by unnecessary interfaces. In addition, during the interconnection between the battery 20 and the battery swappable vehicle 100, two interfaces originally need to be aligned. Arranging the integrated interface further reduces the difficulty in interconnection between the battery 20 and the battery swappable vehicle 100, and helps improve the battery swapping efficiency of the battery swappable vehicle 100.

Still referring to FIG. 7 and FIG. 10, in an embodiment, a groove 2031 is arranged on the end face 203 of the battery 20 facing the battery swappable vehicle 100, and the electrical interface 50 and/or the water-cooling interface 60 are/is arranged in the groove 2031.

The groove 2031 extends in the first direction x on the end face 203 of the battery 20. The groove 2031 may extend in the first direction x to pass through a wall of the battery 20 parallel to the third direction z (as shown in FIG. 10), or may partially extend (as shown in FIG. 9). The groove 2031 is arranged on the end face 203 of the battery 20 such that the electrical interface 50 and the water-cooling interface 60 may be arranged in the groove 2031 without protruding out of the end face 203 of the battery 20, thereby saving the internal space in the battery 20 and the battery compartment 10. In addition, the arrangement of the groove 2031 destroys the flatness of the end face 203 of the battery 20 facing the battery swappable vehicle 100 such that coarse positioning of the electrical interface 50 and/or the water-cooling interface 60 can be implemented by using the groove 2031 in the process in which the battery 20 is lifted by the mobile battery swapping apparatus into the battery compartment 10.

The plurality of batteries 20 arranged in different battery compartments 10 are described in detail below.

In an embodiment, the plurality of batteries 20 have at least two different shapes.

As already mentioned above, the shapes of the different battery compartments 10 may be different, in particular the second battery compartment 102 and the third battery compartment 102, which are respectively arranged at the head 100b and the tail 100c of the battery swappable vehicle 100. Therefore, to accommodate a larger number of batteries, the battery compartments 10 having irregular shapes may be designed according to the actually vacant space of the battery swappable vehicle 100. In the case that the battery compartment 10 has an irregular shape, the batteries 20 having the same regular shape may be used, as described above. In this case, the size of each battery 20 may be designed to be small, so as to fully utilize the space in the battery compartment 10. Alternatively, the battery 20 having a corresponding irregular shape may be designed according to the shape of the battery compartment 10. In other words, an irregularly shaped battery may be arranged in the battery compartment 10 having an irregular shape.

In an embodiment, the plurality of batteries 20 have at least two different sizes. Specifically, the batteries 20 arranged in different battery compartments 10 may have different sizes, or the batteries 20 arranged in the same battery compartment 10 may have different sizes.

For example, the battery swappable vehicle 100 includes a first battery compartment 101 and a second battery compartment 102, and each of the first battery compartment 101 and the second battery compartment 102 has a regular shape. In this case, the batteries 20 arranged in the first battery compartment 101 and the second battery compartment 102 may also have a regular shape, for example, a cuboid shape, but the battery 20 having the cuboid shape arranged in the first battery compartment 101 and the battery 20 having the cuboid shape arranged in the second battery compartment 102 differ in terms of a length, a width, or a height. An example in which the plurality of batteries 20 arranged in the same battery compartment 10 have different sizes has been described above, and details are not described herein again.

In an embodiment, the plurality of batteries 20 have at least two different shapes. Specifically, the batteries 20 arranged in different battery compartments 10 may have different shapes, or the batteries 20 arranged in the same battery compartment 10 may have different shapes.

For example, the battery swappable vehicle 100 includes a first battery compartment 10, and the first battery compartment 10 has a regular shape. In this case, among the plurality of batteries 20 arranged in the first battery compartment 10, some batteries 20 may have the cuboid shape, and the remaining batteries 20 may have the cylindrical shape. Specifically, the batteries 20 are all arranged in the first direction x. In the second direction y, the length of the battery 20 having the cuboid shape may be equal to the height of the battery 20 having the cylindrical shape.

In an embodiment, batteries 20 having different shapes are arranged in different battery compartments 10.

FIG. 11 is another schematic structural diagram of a battery swappable vehicle 100 according to an embodiment of the present application. In the embodiment shown in FIG. 11, the battery swappable vehicle 100 comprises a first battery compartment 101 and a third battery compartment 103. The first battery compartment 101 has a regular cuboid shape, and the third battery compartment 103 has an irregular shape, specifically, an L-shape. The plurality of batteries 20 arranged in the first battery compartment 101 may each be a battery 20 having the cuboid shape, and the plurality of batteries 20 arranged in the third battery compartment 103 may each be a battery 20 having the L-shape.

It should be understood that the above plurality of batteries 20 having the cuboid shape arranged in the first battery compartment 101 may have the same size or have different sizes, and the above plurality of batteries 20 having the L-shape arranged in the third battery compartment 103 may have the same size or have different sizes.

In an embodiment, the plurality of batteries 20 have at least two different full charge levels. Specifically, the batteries 20 arranged in different battery compartments 10 may have different full charge levels, or the batteries 20 arranged in the same battery compartment 10 may have different full charge levels. The batteries 20 having different shapes or sizes may have different full charge levels, or the batteries 20 having the same shape and/or size may have different full charge levels.

Herein, the full charge level means a charge level at which the battery is normally charged until the SOC reaches 100%.

In an embodiment, the battery swappable vehicle 100 comprises a power supply circuit, the power supply circuit comprises a plurality of access sites, and the batteries 20 having different full charge levels are connected to the different access sites.

Specifically, the batteries 20 having different full charge levels may each be provided with a separate power supply circuit to enable the batteries 20 to independently supply power to the battery swappable vehicle 100. When the plurality of batteries 20 of the battery swappable vehicle 100 have different full charge levels, the plurality of batteries 20 may be connected in series to provide a higher voltage when the battery swappable vehicle 100 requires a high voltage. Alternatively, the plurality of batteries 20 may be connected in parallel such that the plurality of batteries 20 having different full charge levels simultaneously supply power to the battery swappable vehicle 100.

In an embodiment, the power supply circuit is configured to be capable of adjusting a series-parallel relationship of the plurality of the batteries 20. Specifically, the power supply circuit may include a plurality of switches, and the series-parallel relationship of the plurality of batteries 20 is adjusted by controlling the plurality of switches. In this way, the series-parallel relationship of the plurality of batteries 20 can be adjusted by using the power supply circuit such that the battery swappable vehicle 100 can meet the differentiated power consumption requirements of the user in different situations.

In an embodiment, the plurality of batteries 20 have at least two different energy densities. Specifically, the plurality of batteries 20 arranged in the same battery compartment 10 may have different energy densities, or the plurality of batteries 20 arranged in different battery compartments 10 may have different energy densities.

For example, the battery swappable vehicle 100 includes a first battery compartment 101 and a second battery compartment 102, the plurality of batteries 20 arranged in the first battery compartment 101 have different energy densities, the plurality of batteries 20 arranged in the second battery compartment 102 have different energy densities, and the energy density of one battery 20 in the first battery compartment 101 may be the same as or different from the energy density of one battery 20 in the second battery compartment 102. For another example, the plurality of batteries 20 arranged in the first battery compartment 101 have the same energy density, that is, have a first energy density. The plurality of batteries 20 arranged in the second battery compartment 102 have the same energy density, that is, have a second energy density. The first energy density is not equal to the second energy density.

On the one hand, a battery with a low energy density has low costs such that a battery swapping fee is low. On the other hand, a battery 20 with a low energy density is generally heavier in the case of the same volume, resulting in increased energy consumption for the user. On the contrary, a battery 20 with a high energy density leads to a high fee but low energy consumption. In this way, the batteries 20 having different energy densities are arranged in the battery swappable vehicle 100 such that the user can flexibly select, according to a requirement of the user, the battery 20 that needs to be replaced, providing the user with more diversified battery swapping schemes.

In an embodiment, the plurality of batteries 20 have at least two different chemical systems. The chemical systems of the batteries include a lithium ion battery, a sodium ion battery, a magnesium ion battery, a lithium metal battery, and the like. The lithium ion battery may be further classified into a lithium cobaltate battery, a lithium iron phosphate battery, a ternary nickel-cobalt-manganese battery, and the like according to the negative electrode material.

The batteries 20 having different chemical systems generally have different capacities, in other words, have different full charge levels in the case of a constant volume. In this way, the batteries 20 having different chemical systems are provided such that the battery swappable vehicle 100 has diversified options of capacities, without changing the structure of the battery compartment 10 of the battery swappable vehicle 100.

In an embodiment, the batteries 20 having different shapes differ in at least one of a full charge level, an energy density, or an electrochemical system.

The present application further provides a method of manufacturing a battery swappable vehicle 100. The method includes: providing a battery compartment 10. The battery compartment 10 is arranged in the battery swappable vehicle 100, the battery compartment 10 is configured to accommodate a plurality of batteries 20, and each battery 20 is capable of independently supplying power to the battery swappable vehicle 100.

In addition, the present application further provides a battery 20 applied to a battery swappable vehicle 100. The battery 20 has all features of the battery 20 described above. Details are not described herein again.

In conclusion, the battery swappable vehicle 100 provided in the present application can be compatible with the batteries 20 having various connection manners, various shapes, various sizes, various full charge levels, and various chemical systems through different designs and combinations of the battery compartments 10 and the batteries 20 such that the user of the battery swappable vehicle 100 can flexibly select appropriate diversified battery swapping schemes according to the driving requirement or the power consumption requirement of the user during battery swapping in the battery swapping station, thereby greatly optimizing the user experience.

Although this application has been described with reference to some preferred embodiments, various modifications to this application and replacements of the components therein with equivalents can be made without departing from the scope of this application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A battery swappable vehicle, **characterized by** comprising:
a battery compartment (10), the battery compartment (10) being arranged in the battery swappable vehicle (100), the battery compartment (10) being configured to accommodate a plurality of batteries (20), and each of the batteries (20) being capable of independently supplying power to the battery swappable vehicle (100).

2. The battery swappable vehicle according to claim 1, wherein the battery compartment (10) comprises:
a first sub-battery compartment (10a) and a second sub-battery compartment (10b), the batteries being fixedly arranged in the first sub-battery compartment (10a), and the batteries being detachably arranged in the second sub-battery compartment (10b).

3. The battery swappable vehicle according to claim 1 or 2, wherein the batteries (20) are arranged in a first direction (x) which is a traveling direction of the battery swappable vehicle (100).

4. The battery swappable vehicle according to claim 3, wherein the length L1 of the batteries (20) in the first direction (x) is less than the length L2 of the batteries (20) in a second direction (y), the second direction (y) is the width direction of the battery swappable vehicle (100), and the first direction (x) is perpendicular to the second direction (y).

5. The battery swappable vehicle according to any one of claims 1 to 4, wherein a replaceable structure (30) is arranged on the battery (20), a connection part (31) corresponding to the replaceable structure (30) is arranged on the battery compartment (10), and the replaceable structure (30) is configured to connect to the connection part (31) to fix the battery (20) in the battery compartment (10).

6. The battery swappable vehicle according to claim 5, wherein *n* replaceable structures (30) are arranged at intervals on the batteries (20), wherein *n* is a positive integer and *n* ≥ 2.

7. The battery swappable vehicle according to claim 5 or 6, wherein the replaceable structure (30) is arranged on a wall of a box of the battery (20) parallel to the second direction (y).

8. The battery swappable vehicle according to any one of claims 5 to 7, wherein the length L1 of the batteries (20) in the first direction (x) satisfies 440 mm ≤ L1 ≤ 800 mm, and the length L2 of the batteries (20) in the second direction (y) satisfies 1.5 * L1 ≤ L2 ≤ 2 * L1.

9. The battery swappable vehicle according to claim 8, wherein 1100 mm ≤ L2 ≤ 1500 mm.

10. The battery swappable vehicle according to claim 8 or 9, wherein the number *n* of the replaceable structures (30) is positively correlated with the length L2 of the batteries (20) in the second direction (y), and negatively correlated with the rigidity P of the batteries (20) in a third direction (z) which is the height direction of the battery swappable vehicle (100).

11. The battery swappable vehicle according to any one of claims 6 to 10, wherein 2 ≤ *n* ≤ 4.

12. The battery swappable vehicle according to any one of claims 5 to 11, wherein a distance d1 between adjacent replaceable structures (30) satisfies 0.5 * L2 ≤ d1 ≤ 0.8 * L2.

13. The battery swappable vehicle according to claim 12, wherein 600 mm ≤ d1 ≤ 1000 mm.

14. The battery swappable vehicle according to any one of claims 6 to 13, wherein the length of the batteries (20) in the third direction (z) is L3, and a distance between the geometric center of the replaceable structure (30) and a bottom plate of the battery swappable vehicle (100) is d2, wherein d2 ≤ 0.5 * L3.

15. The battery swappable vehicle according to claim 14, wherein 80 mm ≤ L3 ≤ 140 mm.

16. The battery swappable vehicle according to claim 14 or 15, wherein 10 mm ≤ d2 ≤ 50 mm.

17. The battery swappable vehicle according to any one of claims 6 to 16, wherein the battery (20) comprises:
a first sub-box (21) and a second sub-box (22), the first sub-box (21) being connected to the second sub-box (22), and in the case that the mechanical strength of the first sub-box (21) is greater than the mechanical strength of the second sub-box (22), the replaceable structure (30) being arranged on the first sub-box (21).

18. The battery swappable vehicle according to claim 17, wherein in the case that the mechanical strength of a wall of the first sub-box (21) parallel to the second direction (y) is greater than the mechanical strength of a wall of the second sub-box (22) parallel to the second direction (y), the replaceable structure (30) is arranged on the wall of the first sub-box (21) parallel to the second direction (y).

19. The battery swappable vehicle according to any one of claims 1 to 18, wherein a wear-resistant structure (40) is arranged on the battery (20).

20. The battery swappable vehicle according to claim 19, wherein the wear-resistant structure (40) is arranged on a wall on which the replaceable structure (30) is located.

21. The battery swappable vehicle according to claim 19 or 20, wherein a distance d3 between two opposite wear-resistant structures (40) in the second direction (y) satisfies 0.4 ≤ d3/L2 ≤ 0.7.

22. The battery swappable vehicle according to claim 21, wherein 700 mm ≤ d3 ≤ 750 mm.

23. The battery swappable vehicle according to any one of claims 1 to 22, further comprising:
a plurality of the battery compartments (10) and a plurality of the batteries (20), at least two of the plurality of the batteries (20) being arranged in one of the battery compartments (10).

24. The battery swappable vehicle according to claim 23, wherein the battery compartments (10) comprise:
a first battery compartment (101), the first battery compartment (101) being arranged at the bottom of the battery swappable vehicle (100).

25. The battery swappable vehicle according to claim 24, wherein a protective plate is arranged on an end face, facing away from the battery swappable vehicle (100), of the battery (20) arranged in the first battery compartment (101), and the protective plate is at least a part of the bottom plate of the battery swappable vehicle (100).

26. The battery swappable vehicle according to any one of claims 23 to 25, wherein the battery compartments (10) comprise:
a second battery compartment (102), the second battery compartment (102) being arranged at the head of the battery swappable vehicle (100).

27. The battery swappable vehicle according to any one of claims 23 to 26, wherein the battery compartments (10) comprise:
a third battery compartment (103), the third battery compartment (103) being arranged at the tail of the battery swappable vehicle (100).

28. The battery swappable vehicle according to any one of claims 1 to 27, wherein the plurality of the batteries (20) have the same shape.

29. The battery swappable vehicle according to claim 28, wherein the plurality of the batteries (20) have the same size, the same arrangement of an electrical interface (50), and the same arrangement of a water-cooling interface (60).

30. The battery swappable vehicle according to claim 29, wherein the arrangement of the electrical interface (50) comprises at least one of a shape of the electrical interface (50) or a position of the electrical interface (50).

31. The battery swappable vehicle according to claim 29 or 30, wherein the arrangement of the water-cooling interface (60) comprises at least one of a shape of the water-cooling interface (60) or a position of the water-cooling interface (60).

32. The battery swappable vehicle according to any one of claims 29 to 31, wherein the electrical interface (50) and/or the water-cooling interface (60) are/is arranged on an end face (203) of the battery (20) facing the battery swappable vehicle (100).

33. The battery swappable vehicle according to claim 32, wherein the electrical interface (50) and/or the water-cooling interface (60) are/is arranged at a middle position of the battery (20) in the second direction (y).

34. The battery swappable vehicle according to claim 32 or 33, wherein the electrical interface (50) is eccentrically arranged on a side of the battery (20) in the first direction (x).

35. The battery swappable vehicle according to any one of claims 29 to 34, wherein a distance d4 between the geometric center of the electrical interface (50) and the geometric center of the battery (20) in the first direction (x) satisfies 120 mm ≤ d4 ≤ 180 mm.

36. The battery swappable vehicle according to claim 32 or 33, wherein the water-cooling interface (60) is arranged on a side opposite to the electrical interface (50) in the first direction (x).

37. The battery swappable vehicle according to claim 32 or 33, wherein in the first direction (x), the water-cooling interface (60) is arranged on the same side as the electrical interface (50) and spaced apart from the electrical interface (50).

38. The battery swappable vehicle according to any one of claims 29 to 33, wherein the water-cooling interface (60) and the electrical interface (50) are the same integrated interface.

39. The battery swappable vehicle according to any one of claims 29 to 38, wherein a groove (2031) is arranged on the end face (203) of the battery (20) facing the battery swappable vehicle (100), and the electrical interface (50) and/or the water-cooling interface (60) are/is arranged in the groove (2031).

40. The battery swappable vehicle according to any one of claims 28 to 39, wherein the plurality of the batteries (20) have at least two different sizes.

41. The battery swappable vehicle according to any one of claims 28 to 40, wherein the plurality of the batteries (20) have at least two different full charge levels.

42. The battery swappable vehicle according to any one of claims 1 to 41, further comprising:
a power supply circuit comprising a plurality of access sites,
the batteries (20) having different full charge levels being connected to the different access sites.

43. The battery swappable vehicle according to claim 42, wherein the power supply circuit is configured to be capable of adjusting a series-parallel relationship of the plurality of the batteries (20).

44. The battery swappable vehicle according to any one of claims 28 to 43, wherein the plurality of the batteries have at least two different energy densities.

45. The battery swappable vehicle according to any one of claims 28 to 44, wherein the plurality of the batteries (20) have at least two different chemical systems.

46. The battery swappable vehicle according to any one of claims 1 to 27, wherein the plurality of the batteries (20) have at least two different shapes.

47. The battery swappable vehicle according to claim 46, wherein the batteries (20) having different shapes are arranged in different ones of the battery compartments (10).

48. The battery swappable vehicle according to claim 46 or 47, wherein the batteries (20) having different shapes differ in at least one of a full charge level, an energy density, or an electrochemical system.

49. A battery, **characterized by** the battery (20) being arranged in a battery compartment (10) of a battery swappable vehicle (100), the battery compartment (10) being configured to accommodate a plurality of the batteries, and each of the batteries (20) being capable of independently supplying power to the battery swappable vehicle (100).

50. The battery according to claim 49, wherein the batteries (20) are arranged in a first direction (x) which is a traveling direction of the battery swappable vehicle (100).

51. The battery according to claim 49 or 50, wherein the length L1 of the batteries (20) in the first direction (x) is less than the length L2 of the batteries (20) in a second direction (y), the second direction (y) is the width direction of the battery swappable vehicle (100), and the first direction (x) is perpendicular to the second direction (y).

52. The battery according to any one of claims 49 to 51, wherein a replaceable structure (30) is arranged on the battery (20), and the battery (20) is fixed in the battery compartment (10) through the replaceable structure (30).

53. The battery according to any one of claims 49 to 52, wherein *n* replaceable structures (30) are arranged at intervals on the batteries (20), wherein *n* is a positive integer and *n* ≥ 2.

54. The battery according to any one of claims 49 to 53, wherein the replaceable structure (30) is arranged on a wall of a box of the battery (20) parallel to the second direction (y).

55. The battery according to any one of claims 49 to 54, wherein the length L1 of the batteries (20) in the first direction (x) satisfies 440 mm ≤ L1 ≤ 800 mm, and the length L2 of the batteries (20) in the second direction (y) satisfies 1.5 * L1 ≤ L2 ≤ 2 * L1.

56. The battery according to any one of claims 51 to 55, wherein 1100 mm ≤ L2 ≤ 1500 mm.

57. The battery according to any one of claims 53 to 56, wherein the number *n* of the replaceable structures (30) is positively correlated with the length L2 of the batteries (20) in the second direction (y), and negatively correlated with the rigidity P of the batteries (20) in a third direction (z) which is the height direction of the battery swappable vehicle (100).

58. The battery according to any one of claims 53 to 57, wherein 2 ≤ *n* ≤ 4.

59. The battery according to any one of claims 53 to 58, wherein a distance d1 between adjacent replaceable structures (30) satisfies 0.5 * L2 ≤ d1 ≤ 0.8 * L2.

60. The battery according to claim 59, wherein 600 mm ≤ d1 ≤ 1000 mm.

61. The battery according to any one of claims 53 to 60, wherein the length of the batteries (20) in the third direction (z) is L3, and a distance between the geometric center of the replaceable structure (30) and a bottom plate of the battery swappable vehicle (100) is d2, wherein d2 ≤ 0.5 * L3.

62. The battery according to claim 61, wherein 80 mm ≤ L3 ≤ 140 mm.

63. The battery according to claim 61 or 62, wherein 10 mm ≤ d2 ≤ 50 mm.

64. The battery according to any one of claims 49 to 63, further comprising:
a first sub-box (21) and a second sub-box (22), the first sub-box (21) being connected to the second sub-box (22), and in the case that the mechanical strength of the first sub-box (21) is greater than the mechanical strength of the second sub-box (22), the replaceable structure (30) being arranged on the first sub-box (21).

65. The battery according to claim 64, wherein in the case that the mechanical strength of a wall of the first sub-box (21) parallel to the second direction (y) is greater than the mechanical strength of a wall of the second sub-box (22) parallel to the second direction (y), the replaceable structure (30) is arranged on the wall of the first sub-box (21) parallel to the second direction (y).

66. The battery according to any one of claims 49 to 65, wherein a wear-resistant structure (40) is arranged on the battery (20).

67. The battery according to claim 66, wherein the wear-resistant structure (40) is arranged on a wall on which the replaceable structure (30) is located.

68. The battery according to claim 66 or 67, wherein a distance d3 between two opposite wear-resistant structures (40) in the second direction (y) satisfies 0.4 ≤ d3/L2 ≤ 0.7.

69. The battery according to claim 68, wherein 700 mm ≤ d3 ≤ 750 mm.

70. The battery according to any one of claims 49 to 69, wherein an electrical interface (50) and/or a water-cooling interface (60) are/is arranged on an end face (203) of the battery (20) facing the battery swappable vehicle (100).

71. The battery according to claim 70, wherein the electrical interface (50) and/or the water-cooling interface (60) are/is arranged at a middle position of the battery (20) in the second direction (y).

72. The battery according to claim 70 or 71, wherein the electrical interface (50) is eccentrically arranged on a side of the battery (20) in the first direction (x).

73. The battery according to any one of claims 70 to 72, wherein a distance d4 between the geometric center of the electrical interface (50) and the geometric center of the battery (20) in the first direction (x) satisfies 120 mm ≤ d4 ≤ 180 mm.

74. The battery according to claim 72 or 73, wherein the water-cooling interface (60) is arranged on a side opposite to the electrical interface (50) in the first direction (x).

75. The battery according to claim 72 or 73, wherein in the first direction (x), the water-cooling interface (60) is arranged on the same side as the electrical interface (50) and spaced apart from the electrical interface (50).

76. The battery according to any one of claims 72 to 75, wherein the water-cooling interface (60) and the electrical interface (50) are the same integrated interface.

77. The battery according to any one of claims 72 to 76, wherein a groove (2031) is arranged on the end face (203) of the battery (20) facing the battery swappable vehicle (100), and the electrical interface (50) and/or the water-cooling interface (60) are/is arranged in the groove (2031).
